(19) Europäisches Patentamt
European Patent Office
Office européen des brevets

(11) **EP 2 525 231 A1**

(12) **EUROPÄISCHE PATENTANMELDUNG**

(43) Veröffentlichungstag:
21.11.2012 Patentblatt 2012/47

(51) Int Cl.:
*G01N 35/10* (2006.01)     *B01L 3/02* (2006.01)
*G01F 23/296* (2006.01)

(21) Anmeldenummer: **11168004.7**

(22) Anmeldetag: **28.05.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **16.05.2011   CH 8192011**

(71) Anmelder:
• **Brinkhaus Management GmbH
8955 Oetwil a.d. Limmat (CH)**

• **Ymatron AG
8157 Diesldorf (CH)**

(72) Erfinder: **Brinkhaus, Bernhard
8955 Oetwil a.d.L. (CH)**

(74) Vertreter: **Dr. Graf & Partner AG
Intellectual Property
Herrenacker 15
Postfach 518
8201 Schaffhausen (CH)**

(54) **Vorrichtung und Verfahren zur Überwachung eines Flüssigkeitsdosierungsvorgangs bei Kolbenhubpipetten**

(57)     Die Vorrichtung für eine Kolbenhubpipette (1) zum Erfassen eines Pipettiervolumens und/oder des Eintauchens in eine Flüssigkeit, umfasst eine Kolbenhubpipette (1) mit einer Pipettenspitze (2), und umfasst einen Aktuator (9) und eine Ansteuerungsvorrichtung (11), wobei die Pipettenspitze (2) als Teil eines Helmholtz-Resonators (13) ausgestaltet ist, indem die Pipettenspitze (2) einen halsförmigen Abschnitt (2c) mit einer Pipettenhalslänge (L) aufweist, und indem der halsförmige Abschnitt (2c) in eine Pipettenspitzenöffnung (2d) mit Querschnittfläche (A) mündet, und wobei die Pipettenspitze (2) und die Kolbenhubpipette (1) ein gemeinsames Volumen (V) umschliessen, und wobei der Aktuator (9) ausgestaltet ist zur Erzeugung einer Anregungskreisfrequenz ($\omega$) im

Bereich von $\omega = c \cdot \sqrt{\dfrac{A}{V \cdot L}}$ , wobei c der Schallgeschwindigkeit entspricht, und wobei die Ansteuervorrichtung (11) eine Änderung der Resonanzkreisfrequenz ($\omega_0$) des Helmholtz-Resonators (13) erfasst.

Figur 4a

**Beschreibung**

Die Erfindung betrifft eine Vorrichtung sowie ein Verfahren zur Überwachung eines Flüssigkeitsdosierungsvorgangs bei Kolbenhubpipetten sowie eine Pipettenspitze für eine derartige Vorrichtung sowie ein derartiges Verfahren.

**Stand der Technik**

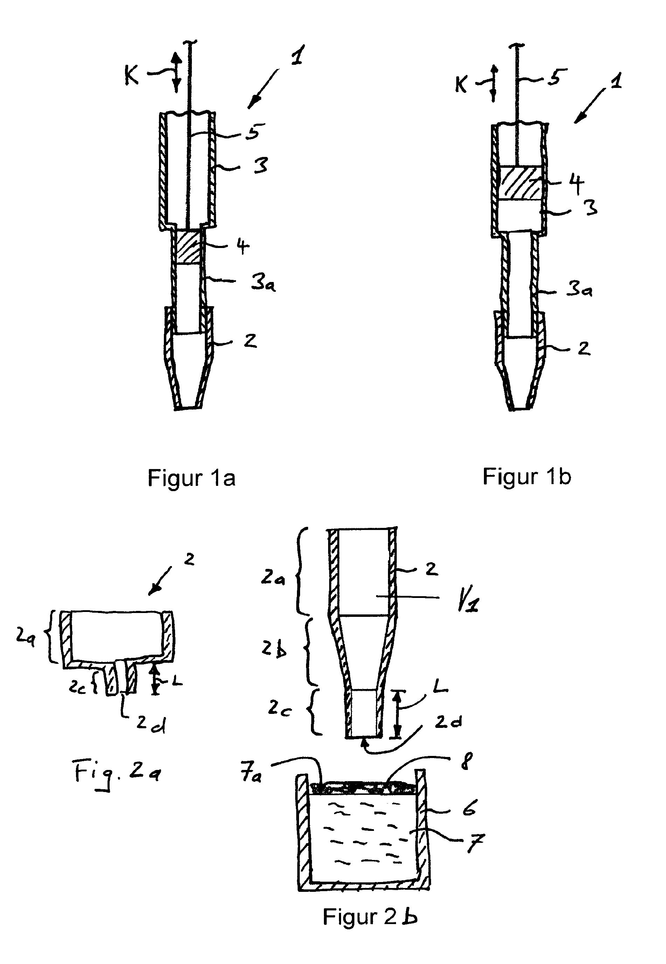

Insbesondere elektronische Kolbenhubpipettiersysteme haben sich in den letzten Jahren in ihrer Form und Gestaltung nicht besonders verändert und sind kaum neuen Umgebungsbedingungen angepasst worden. Bekannte Kolbenhubpipettiersysteme haben üblicherweise eine Anordnung, wie diese in den Figuren 1a und 1b dargestellt ist. Die Kolbenhubpipette 1 umfasst eine Pipettenspitze 2, ein Pipettengehäuse 3 sowie einen innerhalb des Pipettengehäuses 3 in Richtung K verschiebbaren Kolben 4. Möglichen Fehlereinflüsse beim Pipettieren können sehr unterschiedliche Auswirkungen haben, von denen die wichtigsten folgenden Einfluss haben:

Wenn die Kolbenhubpipette tropft liegt eine Undichtigkeit vor. Die Ursache dieser Undichtigkeit kann in einer losen Pipettenspitze, in einer ungeeigneten Pipettenspitze, in einem zerkratzten Arbeitskonus oder in sonstigen defekten Dichtungen liegen. Solche Fehler sind sehr gravierend und treten relativ häufig auf, und zwar bis zu 50%. Die durch alle anderen Einflüsse verursachten Fehler, wie ungleicher Kraftverlauf, Temperaturunterschiede, Luftfeuchtigkeit und der barometrische Druck liegen im kleinen einstelligen Prozentbereich.

Die Druckschrift DE 101 48 608 offenbart ein Verfahren sowie eine Vorrichtung zur Überwachung des Flüssigkeitsdosierungsvorganges bei Kolbenhubpipetten. Bei dieser bekannten Vorrichtung wird ein Drucksensor verwendet, der bei Anhebung des Kolbens den Druckverlauf während des Pipettierens im Immenraum der Kolbenhubpipette beziehungsweise in deren Volumen V anzeigt. Diese bekannte Vorrichtung kann zwar grobe Undichtigkeiten detektieren, weist jedoch eine gewisse Fehleranfälligkeit auf, und kann z.B. auch nicht unterscheiden, ob Schaum oder Luft ansaugt werden.

**Darstellung der Erfindung**

Es ist Aufgabe der vorliegenden Erfindung die Zuverlässigkeit des Flüssigkeitsdosierungsvorgangs bei Kolbenhubpipetten zu verbessern, insbesondere indem die noch möglichen Fehler reduziert werden.

Diese Aufgabe wird gelöst mit einer Vorrichtung für Kolbenhubpipetten aufweisend die Merkmale von Anspruch 1. Die Unteransprüche 2 bis 8 betreffen weitere, vorteilhafte Ausführungsformen. Die Aufgabe wird weiter gelöst mit einem Verfahren zum Betrieb einer Kolbenhubpipette aufweisend die Merkmale von Anspruch 9. Die Unteransprüche 10 bis 12 betreffen weitere vorteilhafte Verfahrensschritte. Die Aufgabe wird weiter gelöst durch die Verwendung von Pipettenspitzen gemäss Anspruch 13.

Die Aufgabe wird insbesondere gelöst mit einer Vorrichtung für eine Kolbenhubpipette zum Erfassen eines Pipettiervolumens und/oder des Eintauchens in eine Flüssigkeit, umfassend eine Kolbenhubpipette mit einer Pipettenspitze, sowie umfassend einen Aktuator und eine Ansteuerungsvorrichtung, wobei die Pipettenspitze als Teil eines Helmholtz-Resonators ausgestaltet ist, indem die Pipettenspitze einen halsförmigen Abschnitt mit einer Pipettenhalslänge L aufweist, und indem der halsförmige Abschnitt in eine Pipettenspitzenöffnung mit Querschnittfläche A mündet, und wobei die Pipettenspitze und die Kolbenhubpipette ein gemeinsames Volumen V umschliessen, und wobei der Aktuator ausgestaltet ist zur Erzeugung einer Anregungskreisfrequenz $\omega$ im Bereich von $\omega = c \cdot \sqrt{\dfrac{A}{V \cdot L}}$ , wobei c der Schallgeschwindigkeit entspricht, und wobei die Ansteuervorrichtung eine Änderung der Resonanzkreisfrequenz $\omega_0$ des Helmholtz-Resonators erfasst.

Die Aufgabe wird zudem insbesondere gelöst mit einem Verfahren für eine Kolbenhubpipette zum Erfassen eines Pipettiervolumens und/oder des Eintauchens der Kolbenhubpipette in eine Flüssigkeit, wobei die Kolbenhubpipette eine Pipettenspitze umfasst, und wobei die Pipettenspitze als Teil eines Helmholtz-Resonators ausgestaltet ist, indem die Pipettenspitze einen halsförmigen Abschnitt mit einer Pipettenhalslänge L aufweist, und indem der halsförmige Abschnitt in eine Pipettenspitzenöffnung mit Querschnittfläche A mündet, und wobei die Pipettenspitze und die Kolbenhubpipette ein gemeinsames Volumen V umschliessen, und wobei das Volumen V mit einer Anregungskreisfrequenz $\omega$ im Bereich von $\omega = c \cdot \sqrt{\dfrac{A}{V \cdot L}}$ angeregt wird, und wobei eine Veränderung der Resonanzkreisfrequenz $\omega_0$ des Helmholtz-Resonators detektiert wird.

Die vorliegende Erfindung bezieht sich auf das Gebiet der elektronischen Messungen von physikalischen und geometrischen Grössen, wie z.B. Volumen, Dichtigkeit, Füllungsgrad und Dichte. Ebenfalls kann ein weites Gebiet von Zuständen gemessen werden. Es handelt sich um eine Integration von Sensoren, Auswerteelektronik und Aktuatoren. Dabei können die Materialzusammensetzung und die Geometrie des Kontrollsystems beliebig sein und nach den zu wandelnden physikalischen oder geometrischen Grössen angepasst werden.

Ein Ziel der vorliegenden Erfindung ist, mit einer Vorrichtung für Kolbenhubpipetten die heute häufig auftreten Fehlereinflüsse beim Pipettieren möglichst zu reduzieren oder ganz zu beseitigen. Insbesondere kann heute fast überhaupt nicht unterschieden werden, ob die Eintauchspitze rein in der zu pipettierenden Flüssigkeit eingetaucht ist, oder ob sie noch im Schaum auf der Oberfläche ist.

Die erfindungsgemässe Vorrichtung weist zudem den Vorteil auf, dass durch die Verwendung von miniaturisierten elektrischen Komponenten und mechanischen Bauteilen es möglich ist die erforderliche Vorrichtung, insbesondere den Aktuator und gegebenenfalls den Sensor, so klein zu gestalten, dass diese sich in das Pipettiersystems integrieren beziehungsweise in die Kolbenhubpipette einbauen lassen, was bezüglich der erfindungsgemässen Vorrichtung den zusätzlichen Vorteil ergibt, dass die Anzahl Kolbenhubpipetten pro Fläche beträchtlich erhöht werden kann. Die heute eingesetzten Überwachungsdrucksensoren erfordern erheblichen Platz.

Die erfindungsgemässe Vorrichtung für eine Kolbenhubpipette macht sich die physikalischen Eigenschaften eines Helmholtz-Resonators zu nutzen. Daher ist es erforderlich, dass die Kolbenhubpipette sowie deren Pipettenspitze derart ausgestaltet und gegenseitig angepasst angeordnet sind, dass diese einen Helmholtz-Resonator ausbilden. Die Pipettenspitze ist als Teil eines Helmholtz-Resonators ausgestaltet, indem die Pipettenspitze einen halsförmigen Abschnitt mit einer Pipettenhalslänge L aufweist, und indem der halsförmige Abschnitt in eine Pipettenspitzenöffnung mit Querschnittfläche A mündet. Die Pipettenspitze und die Kolbenhubpipette umschliessen ein gemeinsames Volumen V. Ein Helmholtz-Resonator weist eine ausgeprägte Resonanzfrequenz beziehungsweise Resonanzkreisfrequenz auf, wobei die Resonanzfrequenz unter anderem von der Querschnittfläche A und vom Volumen V abhängt. Ein Verschliessen der Querschnittfläche A beim Eintauchen der Pipettenspitze hat eine sprunghafte Änderung der Eigenresonanz zur Folge. Eine Veränderung des Volumen V hat ebenfalls eine Änderung der Eigenresonanz zur Folge, sodass es über die Bestimmung der Änderung der Eigenresonanz möglich ist das Eintauchen der Pipettierspitze in eine Flüssigkeit zu erfassen oder eine Pipettiervolumen zu erfassen.

**Kurze Beschreibung der Zeichnungen**

Die zur Erläuterung der Ausführungsbeispiele verwendeten Zeichnungen zeigen:

Fig. 1a        einen Längsschnitt durch eine bekannte Kolbenhubpipette;

Fig. 1b        einen Längsschnitt durch eine weitere bekannte Kolbenhubpipette;

Fig. 2a        ein Längsschnitt durch eine Pipettenspitze;

Fig. 2b        ein Längsschnitt durch eine Pipettenspitze sowie ein darunter angeordneter Flüssigkeitsbehälter;

Fig. 3         einen Längsschnitt durch eine Kolbenhubpipette;

Fig. 4a bis 4c Längsschnitte durch eine Kolbenhubpipette bei unterschiedlichen Verfahrenszuständen;

Fig. 5         einen Längsschnitt durch einen Aktuator;

Fig. 6         einen Längsschnitt durch einen Sensor;

Fig. 7a        einen Längsschnittes durch ein weiteres Ausführungsbeispiel eines im Pipettengehäuse angeordneten Aktuators;

Fig. 7b        eine Draufsicht auf den Aktuator von aussen;

Fig. 8         schematisch eine Ansicht eines Helmholtz-Resonators.

Grundsätzlich sind in den Zeichnungen gleiche Teile mit gleichen Bezugszeichen versehen.

**Wege zur Ausführung der Erfindung**

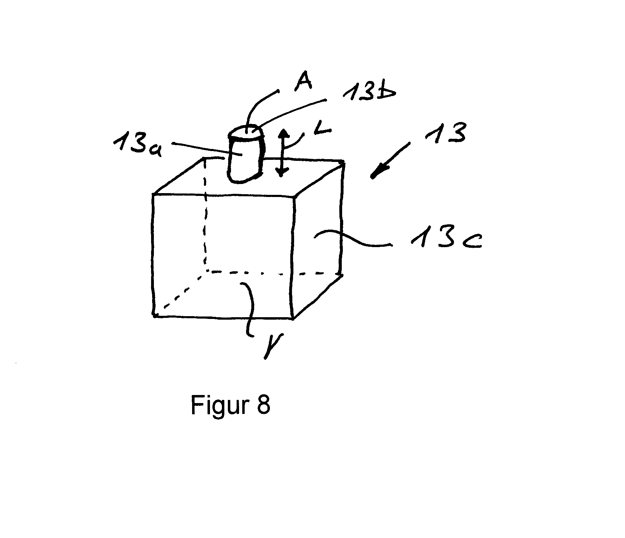

Fig. 8 zeigt schematisch eine Ansicht eines Helmholtz-Resonators 13 mit einem Hohlkörper 13c mit Volumen V, einem halsförmigen Abschnitt 13a mit Länge L und eine Öffnung 13b mit Querschnittsfläche A. Solch ein Helmholtz-Resonator ist ein Absorber, der aufgrund seines resonanten Verhaltens dem sich ausserhalb des Helmholtz-Resonators befindlichen Schallfeld Energie entzieht. Durch die Elastizität des Luftvolumens im Inneren des Hohlkörpers in Kombination mit der trägen Masse der sich im halsförmigen Abschnitt befindlichen Luft entsteht ein mechanisches Masse-Feder-System mit einer ausgeprägten Eigenresonanz. Ein Helmholtz-Resonator weist daher eine ausgeprägte Resonanzkreisfrequenz $\omega_0$ auf, welche sich wie folgt berechen lässt

$$\omega_0 = c \cdot \sqrt{\frac{A}{V \cdot L}} \quad , \text{ wobei c der Schallgeschwindigkeit}$$

entspricht.

Es wurde nun überraschenderweise erkannt, dass ein Helmholtz-Resonators 13 zur Überwachung eines

Flüssigkeitsdosierungsvorgangs bei Kolbenhubpipetten geeignet ist, wenn die Kolbenhubpipette und die Pipettenspitze derart gegenseitig ausgeformt werden, dass diese zusammen einen Helmholtz-Resonator 13 ausbilden, und wenn ein Aktuator verwendet wird, der das Volumen V im Helmholtz-Resonator 13 zum Schwingen anregt.

Die Figuren 2a und 2b zeigen je in einem Längsschnitt ein Ausführungsbeispiel einer Pipettenspitze 2 umfassend einen ersten

Abschnitt 2a sowie einen halsförmigen Abschnitt 2c, der eine Länge L aufweist und in eine Pipettenspitzenöffnung 2d mit Querschnittfläche A mündet. In den beiden dargestellten Ausführungsbeispielen ist der halsförmige Abschnitt 2c hohlzylinderförmig ausgestaltet. Der halsförmige Abschnitt 2c kann in einer Vielzahl von Möglichkeiten ausgestaltet sein, und könnte auch zum Beispiel gekrümmt verlaufen oder einen eckigen Innenquerschnitt, beispielsweise einen viereckigen Innenquerschnitt aufweisen. Die in Figur 2a dargestellte Pipettenspitze 2 umfasst zudem einen konisch verlaufenden Übergangsabschnitt 2b. Der Innenraum der Pipettenspitzen 2 bildet ein erstes Teilvolumen $V_1$.

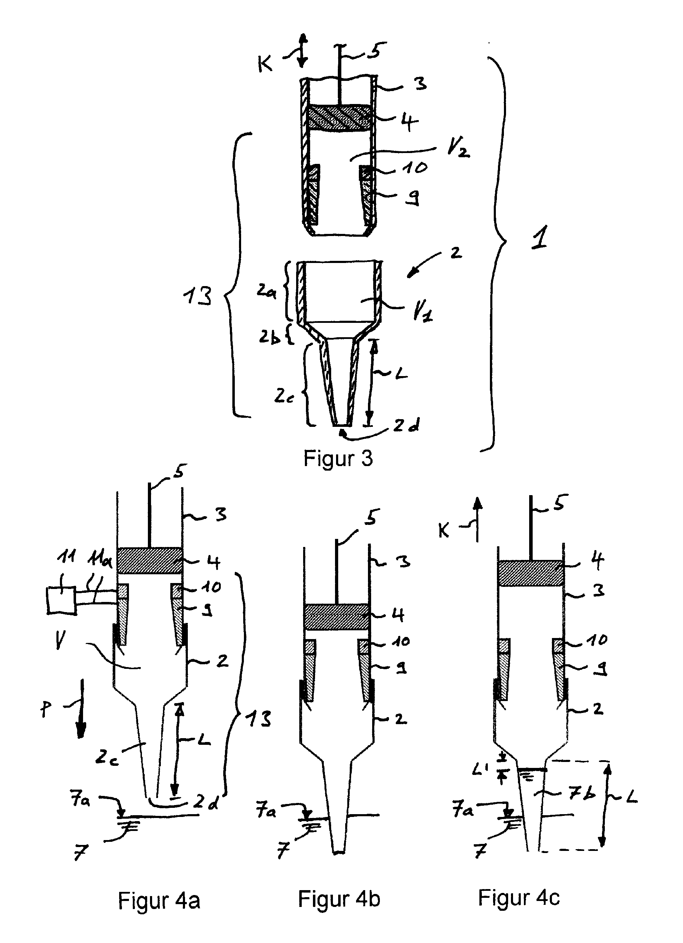

Figur 3 zeigt in einem Längsschnitt eine Kolbenhubpipette 1, welche im Wesentlichen aus zwei Teilen besteht, einem Pipettengehäuse 3 mit darin in Richtung K verschiebbar gelagertem Kolben 4 mit Kolbenstange 5 und einer separaten Pipettenspitze 2, die ähnlich ausgestaltet ist wie bereits in Figur 2b dargestellt. Der Innenraum der Kolbenhubpipette 1 bildet ein zweites Teilvolumen $V_2$. Die Pipettenspitze 2 kann, wie in Figur 4a dargestellt, auf das Pipettengehäuse 3 aufgesteckt werden, und ist vorzugsweise lösbar mit dem Pipettengehäuse 3 verbunden, vorzugsweise derart, dass zwischen der Pipettenspitze 2 und dem Pipettengehäuse 3 eine Fluid dichte Verbindung besteht. Die Pipettenspitze 2 und die Kolbenhubpipette 1 umschliessen somit ein gemeinsames Volumen V, wobei zusammen mit der Pipettenspitze 2 ein Helmholtz-Resonator 13 ausgebildet wird, mit einem halsförmigen Abschnitt 2c der Länge L und einer Austrittsöffnung 2d mit Querschnittfläche A. Die Kolbenhubpipette 1 könnte auch derart ausgestaltet sein, dass das Pipettengehäuse 3 fest und unlösbar mit der Pipettenspitze 2 verbunden ist, wobei das Pipettengehäuse 3 und die Pipettenspitze 2 auch gemeinsam aus einem einzigen Teil bestehen könnten und z.B. aus Glas oder einem Kunststoff gefertigt sind.

In den Figuren 3 sowie 4a bis 4c ist im Innenraum des Pipettengehäuses 3 ein als Schwingungserreger ausgestalteter Aktuator 9 angeordnet, um im gemeinsamen Volumen V eine Schwingung beziehungsweise eine Schallwelle zu erzeugen. Der Aktuator 9 ist aussen zylinderförmig ausgestaltet und liegt am Pipettengehäuse 3 an. Der Aktuator 9 ist innen sich konisch gegen unten erweiternd ausgestaltet. Im Pipettengehäuse 3 ist zudem ein Sensor 10 angeordnet, der ringförmig ausgestaltet ist und an dem Innenrand des Pipettengehäuses 3 anliegt. Der Aktuator 9 sowie der Sensor 10 sind über elektrische Leitungen 11a mit einer Ansteuervorrichtung 11 verbunden.

Vorteilhafterweise wird, wie in Figur 4a dargestellt, am Volumen V ein sogenannter Schwingungserreger 9 angebracht, der sowohl seitlich als auch in Rohrbauform auf das Volumen V wirkt. Der Schwingungserreger 9 kann wie dargestellt in einer konusförmigen Ausführung mit dem Volumen V kombiniert werden, was zusätzlich ermöglicht den hydrostatischen Gegendruck der aufsteigenden Flüssigkeit zu messen.

Das erfindungsgemässe Kontrollsystem für Kolbenhubpipettierungen liefert in dieser Art erstmalig Information über das exakte Eintauchen in die eigentliche Flüssigkeit, auch dann, wenn eine undefinierte Oberfläche mit sich darauf befindlichem Schaum vorliegt. In Figur 4a ist die Pipettieranordnung mit den einzelnen Komponenten dargestellt. In einer derartigen Konfiguration, bestehend aus dem Volumen V, dem Hals L und der Öffnung A der Pipettenspitze 2d kann man eine bis heute für Kolbenhubpipetten nicht angewendete physikalische Beziehung anwenden. Nach einer längeren Herleitung aus der Helmholztheorie erhält man die nachfolgende Beziehung zwischen der Kreisfrequenz $\omega$, dem Volumen V, dem Pipettenspitzenhals mit Länge L und der Pipettenspitzenöffnung A:

$$\omega = c \cdot \sqrt{\frac{A}{V \cdot L}} \, .$$

Der Kolben 4 wirkt auf das Volumen V und ändert die Kreisfrequenz und so kann eine Volumenänderung oder die zu pipettierende Menge über die Änderung der Kreisfrequenz erfasst werden, wenn die Pipettenspitzenfläche A und die Länge des Pipettenspitzenhalses L konstant sind. Dies ist durch die Bauform der Pipettenspitzen gegeben.

Eine weitere Möglichkeit besteht darin das genaue Eintauchen der Spitze in die Flüssigkeit zu bestimmen, da beim Eintauchen der Pipettenspitze in die Flüssigkeit die Fläche A verändert wird und eine Sprungänderung in der Kreisfrequenz erzeugt. Taucht die Pipettenspitze nur in Schaum, dann ergibt sich nur eine kleine Änderung der Kreisfrequenz.

Nachfolgend wird an Hand von Figur 4a beschrieben, wie ein Eintauchen der Kolbenhubpipette 1 beziehungsweise deren Pipettenspitze 2 in eine Flüssigkeit festgestellt werden kann. Der Aktuator 9 wird mit einer Anregungskreisfrequenz $\omega$ im Bereich von

$$\omega = c \cdot \sqrt{\frac{A}{V \cdot L}}$$ angeregt, sodass sich im Volumen V eine entsprechende Schwingung aufbaut. Unter einem Bereich wird hier ein Kreisfrequenzwert verstanden, der genau oder ungefähr, z.B. +/- 10 % dem Wert

$$\omega = c \cdot \sqrt{\frac{A}{V \cdot L}}$$ entspricht. In der in Figur 4a dargestellten Position der Kolbenhubpipette 1 entspricht der Wert ω der Resonanzkreisfrequenz ($\omega_0$) des Helmholtz-Resonators 13. Wird die Kolbenhubpipette 1 nun in Bewegungsrichtung P abgesenkt, so wird die Pipettenöffnung 2d irgendwann den Flüssigkeitsspiegel 7a berühren und danach in die Flüssigkeit eintauchen. Dabei wird die Pipettenspitzenöffnung 2d mit Flüssigkeit bedeckt und die Fläche der Querschnittfläche A strebt gegen Null oder wird zu Null, da zwischen dem Innenraum des halsförmigen Abschnitts 2c und der Aussenluft keine Verbindung mehr besteht. Dies hat zur Folge, dass sich die Resonanzkreisfrequenz $\omega_0$ des Helmholtz-Resonators 13 sprunghaft ändert. Eine derartige Veränderung der Resonanzkreisfrequenz wird auch als Frequenzverstimmung bezeichnet, Die Ansteuervorrichtung 11 und der Aktuator 9 sind derart ausgestaltet, dass diese Veränderung der Kreisfrequenz ω gemessen werden kann, sodass das Eintauchen der Pipettenöffnung 2d in die Flüssigkeit exakt gemessen werden kann. Diese Verstimmung kann mit unterschiedlichen Anordnungen gemessen werden. In einer bevorzugten Ausgestaltung misst die Ansteuerungsvorrichtung 11 die Reaktanz des Aktuators 9, sodass zur Messung kein Sensor 10 erforderlich ist. Wird der Aktuator 9 mit einer Kreisfrequenz ω betrieben, welche der Resonanzkreisfrequenz $\omega_0$ des Helmholtz-Resonators 13 entspricht, so ist zu dessen Betrieb relativ wenig Energie erforderlich. Vor und während dem Eintauchen der Pipettenspitze 2 in die Flüssigkeit 7 wird der Aktuator 9 mit der Kreisfrequenz ω angeregt, wobei sich die Resonanzkreisfrequenz $\omega_0$ des Helmholtz-Resonators 13 beim Eintauchen sprunghaft verändert, sodass sich zwischen der den Aktuator 9 anregenden Kreisfrequenz ω und der Resonanzkreisfrequenz $\omega_0$ des Helmholtz-Resonators 13 eine Frequenzverstimmung ergibt, was die Reaktanz des Aktuators 9 erhöht. Diese Veränderung der Reaktanz und/oder der Frequenzänderung kann von der Ansteuerungsvorrichtung 11 gemessen werden, z.B. in dem der Energieverbrauch des Aktuators 9 oder der Schwingungsweg des Aktuators 9 gemessen wird. Eine weitere Möglichkeit besteht darin die Kreisfrequenz ω, mit welcher der Aktuator 9 angeregt wird, derart um ein Deltaomega Δω nachzuregeln, dass der Aktuator 9 nach dem Eintauchen der Pipettenspitze wieder mit der Resonanzkreisfrequenz $\omega_0$ des Helmholtz-Resonators 13 schwingt. Die sich dabei ergebende Differenz beziehungsweise das Deltaomega Δω ist somit ein Mass für die Zustandsänderung.

Es kann sich jedoch auch als Vorteilhaft erweisen die im Volumen V anliegende Frequenz über einen Sensor 10 zu messen, zum Beispiel mit einer Anordnung wie in Figur 4a dargestellt.

Das erfindungsgemässe Verfahren weist den weiteren Vorteil auf, dass unterschieden werden kann ob die Pipettenspitzenöffnung 2d in eine Flüssigkeit 7 eintaucht, oder, wie in Figur 2b dargestellt, in eine sich über dem Flüssigkeitsspiegel 7a befindliche Substanz wie zum Beispiel ein Schaum 8. Ausgehend von der Formel $$\omega = c \cdot \sqrt{\frac{A}{V \cdot L}}$$ hat das Eintauchen der Pipettenspitzenöffnung 2d in den Schaum 8 zur Folge, dass sich der Wert der Querschnittsfläche A, beziehungsweise die Fläche, welche in Wirkverbindung zur Aussenluft steht, reduziert, sodass sich die Resonanzkreisfrequenz $\omega_0$ des Helmholtz-Resonators 13 verändert. Diese graduelle und nicht sprunghafte Veränderung der Resonanzkreisfrequenz $\omega_0$ des Helmholtz-Resonators 13 ist ein eindeutiger Indikator, dass sich an der Pipettenspitzenöffnung 2d eine Substanz befindet, und dass die Pipettenspitzenöffnung 2d noch nicht in die Flüssigkeit 7 eingetaucht ist. Ein Vorteil des erfindungsgemässen Verfahrens ist somit darin zu sehen, dass ganz eindeutig festgestellt werden kann, selbst bei Schaumbildung auf dem Flüssigkeitsspiegel 7a, ob und wann die Pipettenspitzenöffnung 2d in die Flüssigkeit 7 eingetaucht ist. Die Figur 4b zeigt einen solchen Zustand, bei dem die Pipettenspitzenöffnung 2d in die Flüssigkeit 7 eingetaucht ist. Als nächstfolgender Schritt wird der Kolben 4, wie in Figur 4c dargestellt, in Bewegungsrichtung K nach oben bewegt, sodass eine Flüssigkeitsmenge 7b in die Pipettenspitze 2 gesaugt wird.

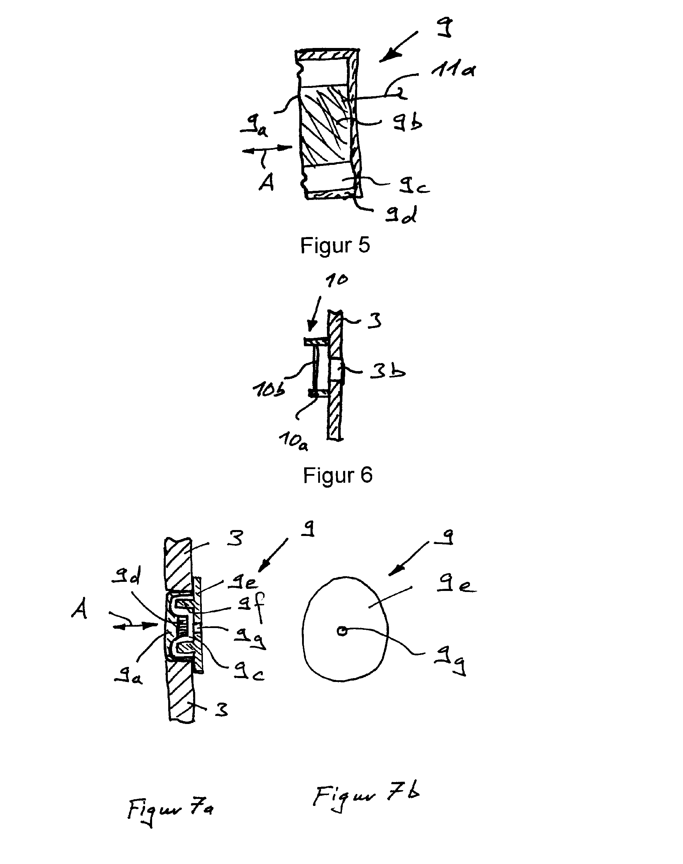

Die Figur 5 zeigt in einem Längsschnitt ein Ausführungsbeispiel eines Aktuators 9. Der Aktuator 9 umfasst ein Gehäuse 9d, einen Hohlraum 9c, eine bewegliche Membran 9a sowie einen die Membran 9a antreibenden piezoelektrischen, elektrodynamischen oder kapazitiven Treiber 9b. Die Membran 9a überträgt die Schwingung, ähnlich einem Lautsprecher, auf Grund Bewegung A in das Volumen V der Kolbenhubpipette 1. Der Treiber 9b wird über eine elektrische Leitung 11a gespiesen. Mit Hilfe des Treibers 9b kann zudem die Reaktanz gemessen werden.

Figur 6 zeigt in einem Längsschnitt schematisch einen Sensor 10 mit einem Gehäuse 10a sowie einer Membran 10b. Im Gehäuse ist zudem eine Öffnung 3b angeordnet, welche in den Aussenraum der Kolbenhubpipette 1 mündet, sodass die Membran 10b das Volumen V vom Aussenraum trennt. Die Membran 10b umfasst ein Sensor zum Messen der Schwingung der Membran 10b.

Figur 7a zeigt in einem Längsschnitt durch das Pipettengehäuse 3 ein weiteres Ausführungsbeispiel eines Aktuators 9. Dieser Aktuator 9 ist ähnlich einem Lautsprecher ausgestaltet und umfasst eine elastische Membran 9a, die in einer Ausnehmung des Pipettengehäuses 3 in Bewegungsrichtung A beweglich gelagert ist. Ein Spulengehäuse mit darin angeordneter Spule 9d ist fest mit der Membran 9a verbunden. An der Aussenseite des Pipettengehäuses 3 ist ein vorzugsweise kreisscheibenförmiger Permanentmagnet 9e angeordnet, der im Zentrum eine Durchgangsöffnung 9g aufweist, und der ein ringförmig vorstehendes Magnetteil 9f aufweist. Die Spule 9d und das Magnetteil 9f bilden zusammen einen elektrodynamischen Treiber 9b aus. Das Magnetteil 9f ist bezüglich der Spule 9d beabstandet angeordnet und umschliesst die Spule 9d von aussen, sodass sich die Spule 9d in einem Permanentmagnetfeld befindet. Zwischen der Spule 9d und dem Magnetteil 9f ist ein Hohlraum 9c ausgebildet, wobei der Hohlraum 9c über die Durchgangsöffnung 9g Fluid leitend mit der Umgebung ausserhalb der Kolbenhubpipette 1 verbunden ist. Die Spule 9d kann eine einzige Spule umfassen, welche elektrisch mit der Ansteuerungsvorrichtung 11 verbunden ist, und welche zur Anregung der Membran 9a dient. In einer besonders vorteilhaften Ausgestaltung umfasst die Spule 9d zwei getrennte Spulen, wobei die erste Spule wie vorhin beschrieben zur Anregung und zum Antrieb der Membran 9a dient, und wobei die zweite Spule als Sensor dient um die Reaktanz und/oder die Bewegung der Membran 9a zu messen. Die erste und die zweite Spule sind über elektrische Leitungen 11a mit der nicht dargestellten Ansteuerungsvorrichtung 11 verbunden. Figur 7b zeigt eine Draufsicht auf den Aktuator 9 von aussen, beziehungsweise eine Draufsicht auf den kreisscheibenförmigen Permanentmagneten 9e, welcher im Zentrum die Durchgangsöffnung 9g aufweist.

Die erfindungsgemässe Vorrichtung sowie das erfindungsgemässe Verfahren ermöglicht es zudem das sich in der Kolbenhubpipette 1 befindliche Pipettiervolumen beziehungsweise das Volumen der in Figur 4c dargestellten Flüssigkeitsmenge 7b zu messen. Für eine derartige Messung wird vorzugsweise eine Anordnung gewählt wie in den Figuren 6 und 7 dargestellt, welche über eine Öffnung 3b oder 9g verfügen, sodass nebst der Pipettenspitzenöffnung 2d über die Öffnungen 3b oder 9g eine zusätzliche Ankoppelung des Volumens V mit dem Bereich ausserhalb der Kolbenhubpipette 1 besteht. Es ist jedoch auch eine Anordnung wie z.B. in Figur 3 dargestellt geeignet. Ausgehend von der Formel

$$\omega = c \cdot \sqrt{\frac{A}{V \cdot L}}$$ hat die sich im halsförmigen Abschnitt 2c befindliche Flüssigkeitsmenge 7b zur Folge, dass die Länge L der sich im halsförmigen Abschnitt 2c befindlichen Luft auf die Länge L' reduziert wird, was eine Veränderung der Resonanzkreisfrequenz $\omega_0$ zur Folge hat. Die während dem Aufziehen der Flüssigkeit zunehmend grösser werdende Flüssigkeitsmenge 7b hat eine Veränderung der Resonanzkreisfrequenz $\omega_0$ zur Folge, welche über die Ansteuerungsvorrichtung 11 gemessen werden kann, zum Beispiel dadurch, dass die Ansteuerungsvorrichtung 11 die Frequenz des Aktuators 9 ständig derart nachregelt, dass dieser sich in Resonanz oder annähernd in Resonanz bezüglich dem Volumen V befindet. In einer möglichen Ausgestaltung werden die Resonanzeigenschaften eine Kolbenhubpipette vorgängig erfasst, indem unterschiedlich grosse Flüssigkeitsmengen 7b in die Kolbenhubpipette aufgesogen werden, und die jeweilige Resonanzfrequenz gemessen wird, sodass ein Zusammenhang zwischen dem Volumen der Flüssigkeitsmenge 7b und der davon abhängigen Resonanzfrequenz gemessen und abgespeichert werden kann. Nach dem erstmaligen Erfassen dieses Zusammenhanges zwischen Resonanzfrequenz und Volumen der Flüssigkeitsmenge 7b kann danach jeweils über die an der Kolbenhubpipette gemessene Resonanzfrequenz auf das Volumen der sich in der Kolbenhubpipette befindlichen Flüssigkeitsmenge 7b geschlossen werden. Somit ist es möglich die Flüssigkeitsmenge 7b in der Kolbenhubpipette zu bestimmen, wobei insbesondere auch eine kontinuierliche Bestimmung der während dem Ansaugen zunehmend grösser werdenden Flüssigkeitsmenge 7b möglich ist. Nebst diesem beispielhaft dargestellten Verfahren sind auch andere Verfahren möglich, um bei der Kolbenhubpipette 1 aus der Resonanzfrequenz auf das Volumen der sich in der Kolbenhubpipette 1 befindlichen Flüssigkeitsmenge 7b zu schliessen.

**Patentansprüche**

1. Vorrichtung für eine Kolbenhubpipette (1) zum Erfassen eines Pipettiervolumens und/oder des Eintauchens in eine Flüssigkeit, umfassend eine Kolbenhubpipette (1) mit einer Pipettenspitze (2), sowie umfassend einen Aktuator (9) und eine Ansteuerungsvorrichtung (11), wobei die Pipettenspitze (2) als Teil eines Helmholtz-Resonators (13) ausgestaltet ist, indem die Pipettenspitze (2) einen halsförmigen Abschnitt (2c) mit einer Pipettenhalslänge (L) aufweist, und indem der halsförmige Abschnitt (2c) in eine Pipettenspitzenöffnung (2d) mit Querschnittfläche (A) mündet, und wobei die Pipettenspitze (2) und die Kolbenhubpipette (1) ein gemeinsames Volumen (V) umschliessen, und wobei der Aktuator (9) ausgestaltet ist zur Erzeugung einer Anregungskreisfrequenz (ω) im Bereich von

$$\omega = c \cdot \sqrt{\frac{A}{V \cdot L}}$$ , wobei c der Schallgeschwindigkeit entspricht, und wobei die Ansteuervorrichtung (11) eine Änderung der Resonanzkreisfrequenz ($\omega_0$) des Helmholtz-Resonators (13) erfasst.

2. Vorrichtung nach Anspruch 1, **dadurch gekennzeichnet, dass** der Aktuator (9) innerhalb des Volumens (V) angeordnet ist.

3. Vorrichtung nach Anspruch 1 oder 2, **dadurch gekennzeichnet, dass** der Aktuator (9) seitlich am Pipettengehäuse (3) angeordnet ist.

4. Vorrichtung nach einem der vorhergehenden Ansprüche, **dadurch gekennzeichnet, dass** der Aktuator (9) rohrförmig ausgestaltet ist.

5. Vorrichtung nach einem der vorhergehenden Ansprüche, **dadurch gekennzeichnet, dass** der Aktuator (9) einen konusförmig verlaufenden Innenquerschnitt aufweist.

6. Vorrichtung nach Anspruch 5, **dadurch gekennzeichnet, dass** der konusförmig ausgebildete Aktuator (9) einen derart gestalteten und angeordneten Innenquerschnitt aufweist, dass dieser einen hydrodynamischen Widerstand für die aufsteigende Flüssigkeit darstellt.

7. Vorrichtung nach Anspruch 6, **dadurch gekennzeichnet, dass** über die Erfassung des hydrodynamischen Widerstandes die zu pipettierende Flüssigkeit in ihrer Dichte gemessen werden kann.

8. Vorrichtung nach einem der vorhergehenden Ansprüche, **dadurch gekennzeichnet, dass** die Pipettenspitze (2) als separates Teil ausgestaltet ist.

9. Verfahren für eine Kolbenhubpipette (1) zum Erfassen eines Pipettiervolumens und/oder des Eintauchens der Kolbenhubpipette (1) in eine Flüssigkeit, wobei die Kolbenhubpipette (1) eine Pipettenspitze (2) umfasst, und wobei die Pipettenspitze (2) als Teil eines Helmholtz-Resonators (13) ausgestaltet ist, indem die Pipettenspitze (2) einen halsförmigen Abschnitt (2c) mit einer Pipettenhalslänge (L) aufweist, und indem der halsförmige Abschnitt (2c) in eine Pipettenspitzenöffnung (2d) mit Querschnittfläche (A) mündet, und wobei die Pipettenspitze (2) und die Kolbenhubpipette (1) ein gemeinsames Volumen (V) umschliessen, und wobei das Volumen (V) mit einer Anregungskreisfrequenz (ω) im Bereich von

$$\omega = c \cdot \sqrt{\frac{A}{V \cdot L}}$$

angeregt wird, und wobei eine Veränderung der Resonanzkreisfrequenz ($\omega_0$) des Helmholtz-Resonators (13) detektiert wird.

10. Verfahren nach Anspruch 9, **dadurch gekennzeichnet, dass** ein Eintauchen der Pipettenspitze (2) in die Flüssigkeit über eine sprunghafte Veränderung der Resonanzkreisfrequenz ($\omega_0$) detektiert wird.

11. Verfahren nach Anspruch 9, **dadurch gekennzeichnet, dass** ein Eintauchen der Pipettenspitze (2) in einen Schaum durch eine graduelle Veränderung der Resonanzkreisfrequenz ($\omega_0$) detektiert wird.

12. Verfahren nach einem der Ansprüche 9 bis 11, **dadurch gekennzeichnet, dass** nach erfolgtem Eintauchen der Pipettenspitze (2) in die Flüssigkeit das Pipettiervolumen über eine graduelle Veränderung der Resonanzkreisfrequenz ($\omega_0$) detektiert wird.

13. Verwendung einer Pipettenspitze (2) aufweisend einen ersten Abschnitt (2a) und nachfolgend einen halsförmigen Abschnitt (2c) mit gegenüber dem ersten Abschnitt (2a) reduzierten Durchmesser (D), wobei der halsförmige Abschnitt (2c) eine Pipettenhalslänge (L) aufweist und in eine Pipettenspitzenöffnung (2d) mündet, für eine Vorrichtung nach einem der Ansprüche 1 bis 8 oder für ein Verfahren nach einem der Ansprüche 9 bis 12.

Figur 1a                    Figur 1b

Fig. 2a

Figur 2 b

Figur 3

Figur 4a          Figur 4b          Figur 4c

Figur 5

Figur 6

Figur 7a

Figur 7b

Figur 8

Europäisches
Patentamt

European
Patent Office

Office européen
des brevets

**EUROPÄISCHER RECHERCHENBERICHT**

Nummer der Anmeldung

EP 11 16 8004

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2010 008298 A (HITACHI HIGH TECH CORP) 14. Januar 2010 (2010-01-14) * das ganze Dokument * ----- | 1-13 | INV. G01N35/10 B01L3/02 G01F23/296 |
| A | US 4 846 003 A (MARQUISS SAMUEL A [US]) 11. Juli 1989 (1989-07-11) * das ganze Dokument * ----- | 1-13 | |
| A,D | DE 101 48 608 A1 (HAMILTON BONADUZ AG BONADUZ [CH]) 12. September 2002 (2002-09-12) * Zusammenfassung * * Ansprüche * * Abbildungen * ----- | 1-13 | |

| RECHERCHIERTE SACHGEBIETE (IPC) |
|---|
| G01N B01L G01F |

Der vorliegende Recherchenbericht wurde für alle Patentansprüche erstellt

| Recherchenort | Abschlußdatum der Recherche | Prüfer |
|---|---|---|
| Den Haag | 31. August 2011 | Ruchaud, Nicolas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**  EP 11 16 8004

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-08-2011

| Im Recherchenbericht angeführtes Patentdokument | Datum der Veröffentlichung | Mitglied(er) der Patentfamilie | Datum der Veröffentlichung |
|---|---|---|---|
| JP 2010008298 A | 14-01-2010 | KEINE | |
| US 4846003 A | 11-07-1989 | KEINE | |
| DE 10148608 A1 | 12-09-2002 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10148608